# EUROPEAN PATENT APPLICATION

(11) **EP 0 943 591 A1**
(43) Date of publication of application: **22.09.1999**
(21) Application number: 99830049.5
(22) Date of filing: 02.02.1999
(51) Int. Cl.: C04B 28/14, C04B 24/00

(54) **Mouldable composition based on gypsum and organic binder**

(30) Priority: 16.03.1998 IT LU980002
(71) Applicant: Lebigre, Gilbert, 55041 Camaiore (Lucca) (IT)
(72) Inventor: Lebigre, Gilbert, 55041 Camaiore (Lucca) (IT)
(74) Representative: Bardini, Marco Luigi

(57) **Abstract**

A mouldable composition for room temperature manufacturing of plastic articles, stucco works, panels and the like, comprising an inert material of the limestone, clay of limestone-clay type, powder or fibrous cellulosic material, gypsum and a natural binder, as well as water in an amount sufficient to produce a mixture of said components having a consistency as requested for each specific use.

## Description

The present invention relates to a moulding composition to make plastic i.e. tridimensional articles, including the ornamental articles, as well as stucco works, panel and the like, by moulding, hardening and room temperature drying.

The composition according to the invention is especially designed to the fields of plastic arts, decorative works, home and ship furnishing, building industry and set designing.

In the above mentioned fields a wide use is made of materials exhibiting unsatisfactory features either from the ecological point of view or from the point of view of their inflammability or both of these reasons. Reference is made in particular to the widespread use of plastics and resins, agglomerated wood powder and/or fibres and like materials, to make decorative objects, insulation panels, plasters, stucco works, busts and mannequins, sceneries and many other uses.

It is known that the properties which are requested to the commonly used materials in the above mentioned fields are mouldability, controlled hardening, lightness, strength, low cost. At the present time, there do not exist materials or combination of materials usable for the above mentioned works which meet these requirements and, at the same time, have the features of being completely ecological and not flammable or, at least, selfextinguishing. Furthermore, generally, to harden the workpieces made of the known materials, it is necessary to heat them .

Therefore, it is an object of the present invention to provide an ecological and, at least, self-extinguishing composition suitable of being used to make plastic articles, stucco works, panels, by way of moulding and room temperature hardening and drying.

Another object of the invention is to provide a material according to the above mentioned composition suitable for the production of plastic articles, stucco woks, panels, interior works and the like by means of moulding and room temperature hardening and drying.

The above objects are reached with the composition of the present invention which is characterized by the fact that it comprises a calcareous and/or clayey inert material, a powder or fibrous cellulosic material, gypsum and a natural binder, as well as water in an amount sufficient to obtain a mixture of the above components with the consistency required for each specific use.

In the preferred embodiment of the invention micronized amorphous limestone can be used as a inert material. As an alternative, clay and in particular the common mouldable clay, can be advantageously used as a inert material, while the preferred type of gypsum is the so-called cast or moulding plaster (semi-hydrated gypsum with an approximate purity of 95%). As a further alternative, kaoline can be used as a clayey material, and in the place of the cast plaster, the other types of commercial gypsum having a lower degree of purity.

Advantageously, the cellulosic material used in the composition according to the present invention is recycle paper pulp, commonly used in the paper industry for the production of paper. In the composition of the invention the pulp of paper essentially has the function to give a fibrous structure to the mixture and to reduce its weight. As an alternative, cotton fiber pulp or similar natural fiber can be used.

As a binding substance any natural binder can be used, such as gum arabic, various kind of flours, for example wheat, carob wheat, guar wheat, or sodium alginate. Obviously, the list is indicative only and any other similar or equivalent can be used as an alternative.

The dry-basis weight percent of the above components in the composition according to the invention is preferably as follows:

| | |
|---|---|
| cellulosic material | 5-30% |
| natural binder | 1-10% |
| inert material | 5-30% |
| gypsum | 20-80% |

In an embodiment of the invention there are used components that, with the exception of the gypsum, are already available in the wet form and therefore the amount of water can be made up according to the consistency of the mixture to be prepared as a function of its destination.

In particular, if, for example, commercially available paper pulp with a moisture content of about 50%, moulding clay containing about 40% of water and a natural binder in a 20% aqueous solution approximately are used, the initial water content of the mixture formed by paper pulp, natural binder and moulding clay is, as an average, comprised between 50 and 70% by weight approximately. According to the different destination of the mixture the amount of gypsum and the possible water make-up will be adjusted consequently to reach the requested consistency.

The following formulation was found particularly suitable for producing plastic articles and stucco works (dry-basis weight percent).

| | |
|---|---|
| paper pulp | 12,5% |
| binder | 5,7% |
| moulding clay | 10,7% |
| gypsum | 71,1% |

The paper pulp used in this case was preferably composed of recycle paper.

The initial water content, before the addition of gypsum, is about 60% and to obtain a mixture of suitable consistency no water make-up is necessary.

The above mentioned formulation can be used also with advantage for puttying between adjacent parts of the workpieces to be connected, preferably with the addition of a gypsum setting retarder such as an animal gelatin, glue beads and the like.

The above formulation is also suitable for the formation of spray-applied coatings: in this case the fluidity of the mixture must be increased preferably by increasing the amount of wet binder or, in any case, by increasing the dilution.

In another formulation of the composition according to the invention micronized amorphous lime of organic origin is used as an inert material. In this case the presently preferred dry-basis weight composition is as follows:

| | |
|---|---|
| paper pulp | 8,9% |
| binder | 1,8% |
| amorphous lime | 17,9% |
| gypsum | 71,4% |

This formulation is particularly suited for the manufacture of panels and structure parts, such as columns, frames, partition walls and the like.

In the practical use of the composition according to the invention the binder is first prepared, unless already available, in an aqueous suspension, by mixing it with the required amount of water and optionally heating up to the boiling point to produce an adhesive paste. Afterwards the clay is mixed homogeneously with the binder and then the paper pulp is added under continuous mixing. Finally gypsum is added and the eventual water make-up is provided as a function of the destination of the mixture. If amorphous lime is used as an inert material, it is preferred to mix the binder first with the paper pulp and then with the lime.

If the mixture is designed to produce tridimensional articles or, in particular, panels it is applied on a glass fiber net preferably not dressed with resins, or on a metallic net or jute cloth acting as a frame to hold the mixture during the shaping step and to increase the strength when the workpiece is hardened. The hardening time varies, obviously, as a function of the percentage of components and of the water content, as well as of the possible presence of setting retarders, but as an average it is 30 minutes approximately. The workpiece can be easily cut without crushing even though already dried.

A further embodiment of the composition according to the invention is especially suited when it is requested to produce a mixture fit for being sacked and marketed in dry form. In this embodiment as a inert material micronized amorphous lime or kaoline is used in combination with cotton fiber or dry paper powder as cellulosic material and a dry binder such as sodium alginate or guar as a natural binder. In this case the mixture will be prepared by adding gypsum and water to the other components in the amount necessary to form a mixture suitable for each application.

The works obtained with the material according to the invention exhibit very good properties of flame resistance in the presence of heat or fire and do not spread nor upheld the flame. Tests conducted according to IMO A 653(16) Resolution, as modified by MSC61(67) Resolution confirmed that the material can be defined as low flame spread material, smoke and toxicity tests having been also overcome.

The porosity of the workpieces increases as the percentage of clay increases as well as the lightness can be increased by increasing the percentage of paper pulp. However, in this way a strength reduction necessarily occurs and, beyond certain limits, the product looses its selfextinguishing properties. On the other hand, by increasing the percentage of gypsum the works become more compact, but even more fragile. Furthermore, the works obtained by using the above mentioned preferred formulation can be easily cut and pierced by means of common tools with negligible crushing.

Pigments can be added to the mixtures according to the composition of the invention to give special colorations to the final workpiece.

The addition of small amounts of vegetable oils can be also advantageous to increase the elasticity of the workpiece, while, if a waterproof product is desired, the hardened and dried workpiece can be surface treated with sodium and potassium silicate commercially available in the form of an aqueous solution. Glass fiber can be also used with advantage as a further additive.

The formulations which contain clayey materials as inert material give rise to mixtures, and, therefore, to workpieces having a relatively high porosity, whereby unless they are waterproofed, they can absorb significant amounts of essences that are slowly released. These materials are, therefore, ideal as essence diffusers.

Variations and/or modifications can be brought to the selfextinguishing ecological composition according to the present invention, without departing from the scope of the invention as set forth in the appended claims.

## Claims

1. A mouldable composition for room temperature manufacturing of plastic articles, stucco works, panels and the like, characterized in that it comprises an inert material of the limestone, clay or limestone-clay type, powder or fibrous cellulosic material, gypsum and a natural binder, as well as water in an amount sufficient to produce a mixture of said components having a consistency as requested for each specific use.

2. Composition according to claim 1, wherein said components are contained in the following weight percentage on a dry-basis:
| | |
|---|---|
| cellulosic material | 5-30% |
| natural binder | 1-10% |
| inert material | 5-30% |
| gypsum | 20-80% |

3. Composition according to the previous claims, wherein said inert material is moulding clay or kaoline.

4. Composition according to claim 1 or 2, wherein said inert material is micronized amorphous limestone.

5. Composition according to the previous claims, wherein said gypsum is molding plaster.

6. Composition according to the previous claims, wherein said cellulosic material is recycle paper pulp.

7. Composition according to the previous claims, wherein said natural binder is gum arabic, guar wheat, carob wheat, wheat, sodium alginate and similar natural binder.

8. Composition according to the previous claims, further comprising a vegetable oil to increase the elasticity thereof.

9. Workpieces characterized in that they are formed by components according to the composition claimed in any of the previous claims and in that they comprise a inner frame of glass fiber net, metal net or cloth.

10. Workpieces according to claim 9, characterized in that they are made waterproofed by applying sodium and potassium silicate thereon.

11. Workpieces according to claims 9 and 10, characterized in that they comprise a releasable aromatic essence absorbed therein.
